# EUROPEAN PATENT SPECIFICATION

(11) **EP 3 018 778 B1**
(45) Date of publication and mention of the grant of the patent: **21.08.2019**
(21) Application number: 15020215.8
(22) Date of filing: 02.11.2015
(51) Int. Cl.: H02G 1/12, H02G 1/00, B26B 13/00

(54) **PAIR OF SHEARS FOR CUTTING TUBES**
SCHERE ZUM SCHNEIDEN VON ROHREN
PAIRE DE CISAILLES PERMETTANT DE COUPER DES TUBES

(30) Priority: 04.11.2014 NL 2013733
(43) Date of publication of application: 11.05.2016
(73) Proprietor: Klinkers, Marcus Leonardus Hendrickus Hubertus, 6191 JD Beek (NL); Dam, Danny Marinus Theresia, 6191 VC Beek (NL)
(72) Inventor: Klinkers, Marcus Leonardus Hendrickus Hubertus, 6191 JD Beek (NL); Dam, Danny Marinus Theresia, 6191 VC Beek (NL)
(74) Representative: Pronovem

(56) References cited:
- CN-U- 202 424 031
- DE-A1-102011 015 362
- KR-U- 20090 002 076
- US-A- 4 229 849
- US-A- 4 912 847

## Description

### FIELD OF THE INVENTION

The present invention generally relates to a pair of shears that is suitable to be used for cutting tubes. Particularly, the present invention relates to a pair of shears that is suitable to be used for cutting corrugated/flexible tubes. More particularly, the present invention relates to a pair of shears that is suitable to be used for cutting tubes containing at least one wire. Even more particularly, the present invention relates to a pair of shears that is suitable to be used for cutting corrugated/flexible tubes containing at least one wire.

### BACKGROUND OF THE INVENTION

Tubes are commonly used in construction and renovation projects and serve for guiding materials. For instance, tubes are used as conduits for electrical wiring (e.g. power, telephone, ethernet, coaxial). Such tubes come in various forms (e.g. rigid, flexible, with smooth outer and inner surface, with corrugated outer and inner surface, etc.). Tubes can be made of various materials, including metal and plastic, wherein it is noted that the present invention is particularly applicable in the field of tubes made of plastic.

Flexible tubes having a corrugated appearance are known and are available in various sizes (e.g. with a diameter of 16 mm or 20 mm). Such corrugated tubes are primarily used in construction and renovation projects, but can also be used for the production of prefab or precast wall panels, floor panels and roof panels, for example. Corrugated tubes can be made from a variety of materials, but are predominantly made from polymers such as polyvinyl chloride, ethylene vinyl acetate, nylon, polyamide, polypropylene, polyethylene. Corrugated tubes are particularly suitable to be used for accommodating various types of electrical wiring. For increased efficiency and ease of use, these corrugated tubes can be pre-fit with the required electrical wiring.

It may be well appreciated that generally the aforementioned types of tubes are not manufactured at the required length, but are tailored to the requirements on site. Therefore, it is important that the length of the tubes can be adjusted, using a simple tool that can be carried by the construction worker and that can be operated single-handedly, with the least possible chance of error.

Despite the widespread use of the corrugated tubes as mentioned in the foregoing, practically no specialized tools have been developed to process and manipulate these tubes single-handedly, with the least possible chance of error. Currently, corrugated tubes are predominantly cut to the required length using nippers, or using a cable knife and nippers, or using a tube cutter. All these alternatives suffer from disadvantages, because they were not specifically designed to cut corrugated tubes. For instance, most of these tools require complex maneuvers (e.g. carefully applied force, while rotating tool and/or tube) to cut the corrugated tubes. Particularly, when corrugated tubes containing one or more wires are used, a high level of care is required in order to prevent damaging an outer insulating layer of the wires or even cutting the wires along with the tubes.

US 4,912,847 describes a cutting tool for cutting corrugated tubes with a limited risk of damaging an outer insulating layer of the wires or even cutting the wires provided in the corrugated tube. This cutting tool comprises a pair of pliers that are each equipped with concave recessions with indexing means that are provided at the ends and sides of the pair of pliers adapted for receiving the corrugated tube. In a closed position of the pair of pliers, these concave recessions define an opening for receiving the tube lined with indexing means, which indexing means are adapted to engage the groove between consecutive ridges of the corrugated tube. Thereby these indexing means limit axial displacement, but allow the rotation of the cutting tool in relation to the corrugated tube. The means for cutting the corrugated tube is essentially provided by a straight knife blade that is provided near the indexing means of one of the pliers. A disadvantage of using such a cutting tool for cutting corrugated tube is that it requires a two-handed operation, wherein one hand is used to handle the pliers and engage the indexing means with the groove of the corrugated tube, and wherein the other hand handles the corrugated tube. Another disadvantage resides in the fact that cutting the entire circumference of the corrugated tube requires a complex maneuver by means of which the cutting tool is rotated in relation to the corrugated tube. These disadvantages limit the application of such a cutting tool to situations in which an operator has both hands available for performing a cutting action as desired, and in which it is furthermore possible to actually make the required rotational movement. KR 2009 0002076 U discloses a scissors for cutting the isolation of a cable without damaging the wires inside. This can be done using one hand only, but there is no overlapping of the shearing portions so it lacks accuracy and finish of the cut.

### OBJECT OF THE INVENTION

It is an object of the invention to provide an instrument that allows cutting tubes containing one or more wires, while preventing an outer insulating layer of the wires from getting damaged, or preventing the wires from being cut along with the tubes, by a simple and single-handed movement.

### SUMMARY OF THE INVENTION

The object of the invention is achieved by providing a pair of shears for cutting tube, in particular flexible tube containing at least one wire, comprising two shears which are pivotally connected to each other through a pivot axis , wherein each shear is equipped with a gripping portion which is intended to be taken hold of by a user, characterized in that each shear is furthermore equipped with a shearing portion having at least one tube cutting edge for cutting tube wherein the at least one tube cutting edge of the one shear is located at substantially the same distance from the pivot axis as the at least one tube cutting edge of the other shear and constitutes a set therewith, wherein the tube cutting edges of a set are movable towards each other and away from each other by moving the gripping portions of the shears with respect to each other, wherein both tube cutting edges of a set have a concave shape, and wherein, in a closed position of the pair of shears, in which the tube cutting edges have been moved towards each other to a maximum extent, the shearing portions of the shears partially overlap and a space having a convexly curved periphery is delimited by the tube cutting edges.

A general advantage of a pair of shears is that it can be operated single-handedly.

Another general advantage of a pair of shears is that it can be operated with a simple squeeze of the gripping portions of the shears.

According to the invention, the pair of shears comprises at least one set of tube cutting edges in which each of the cutting edges has a concave shape, wherein the pair of shears is designed such that in a closed position thereof, the shearing portions of the shears partially overlap and a space having a convexly curved periphery is delimited by the tube cutting edges. On the basis of these features of the pair of shears, it is possible to ensure that when the pair of shears is applied for cutting tube, only the wall of the tube is cut and that the cutting action stops when the tube cutting edges have passed through the wall, wherein the tube cutting edges are prevented from advancing towards a central space of the tube where wiring may be present. In particular, the space which is delimited by the tube cutting edges in the closed position of the pair of shears can be chosen such as to be small enough for allowing the tube cutting edges to cut through a tube having a certain diameter, and to be large enough for leaving wiring as may be present inside a tube to be cut intact.

Surprisingly, the concave shape of the tube cutting edges has an effect of locking the tube into place during closure of the pair of shears, which further enables a single-handed operation. On top of that, the concave shape of the tube cutting edges improves the accuracy and the finish of the cut, by locking the tube into place and distributing the pressure of the tube cutting edges over a wider area of the tube.

In a preferred embodiment, the shearing portions of the shears comprise at least partially beveled sections at the position of the tube cutting edges. In this way, it is possible to apply a lateral force in addition to a compressive force, which improves the efficiency of obtaining a complete cut of the tube and reduces forces to be exerted by the user.

It is practical for the tube cutting edges to be present at the side of main surfaces of the shears for moving across each other, wherein the at least partially beveled sections extend from the tube cutting edges to other delimiting edges located at the other main surfaces.

Advantageously, the other delimiting edges are longer than the tube cutting edges, yet have a similar shape. In case the pair of shears is used for cutting corrugated tube, the partially beveled sections can have a function in gradually pushing apart high portions of the corrugated shape which are present adjacent to a cutting position in a low portion of the corrugated shape, thereby stretching the tube in a longitudinal direction to some extent, which facilitates a cutting action by locally reducing flexibility of the tube in the direction in which the cutting action is performed.

As mentioned, the tube cutting edges of a set, i.e. cooperating cutting edges, delimit a space having a convexly curved periphery in the closed position of the pair of shears. To that end, both tube cutting edges of a set are preferably shaped as a half circle or a long half oval. Preferably, an oval shape is applied, as such shape of the tube cutting edges appears to yield the most efficient tube cutting process.

The tube cutting edges may be part of a blade or the like that can be made from a suitable hard material including ceramics, glass, polymers metals and metal alloys.

The two shears are connected through the pivot axis. The pivot axis can be positioned at various locations along the shears. For instance, the pivot axis can be positioned at a handling end of the shears, i.e. an end where the gripping portions of the shears are located. Alternatively, the pivot axis can be positioned at a shearing end of the shears opposite to the handling end. Preferably, the pivot axis is positioned between the gripping portions and the shearing portions of the shears.

The connection between the shears can be realized in any possible practical way, for instance, through a hole and shaft. Preferably, an interference fit is used with a low tolerance, for instance an H7 fitting, to enable an efficient and reproducible cutting action.

The shears can be equipped with stoppers for abutting against each other in the closed position of the pair of shears. Such stoppers can be positioned at various locations along the shears. For instance, the stoppers can be positioned at the handling end of the shears. Alternatively, the stoppers can be positioned at the shearing end of the shears opposite to the handling end. Preferably, the stoppers are located at a position close to the pivot axis, for instance between the gripping portions of the shears and the pivot axis.

The pair of shears can be equipped with means to maintain an open position in an unloaded state. This can be achieved by mounting a spring between the shears. Various types of springs can be used, for instance a leaf spring or a compression spring. Preferably, a pruner spring is used.

The spring can be positioned at various locations in the pair of shears. For instance, the spring can be positioned at the handling end of the pair of shears. Alternatively, the spring can be positioned at the shearing end of the pair of shears opposite to the handling end. Preferably, the spring is located at a position close to the pivot axis, for instance at a position on the gripping portions of the pair of shears.

In one embodiment of the pair of shears according to the present invention, the shears are equipped with multiple concavely shaped tube cutting edges, each tailored for specific tube diameters, like 16 mm and 20 mm.

In yet another embodiment of the pair of shears according to the present invention, each shear is, in addition to the tube cutting edge, equipped with a wire cutting edge for cutting through wire. A notable difference between a set of tube cutting edges and a set of wire cutting edges is that the wire cutting edges are adapted to be moved beyond each other in the closed position of the pair of shears, thereby leaving no space between them in the said position of the pair of shears. In that way, a complete cut of wires is ensured when the pair of shears is put from an open position to the closed position. The concave shape of the opposed wire cutting edges locks the wire(s) to be cut into place during closure. Preferably, the concave shape has a sharp angle at the location nearest to the pivot axis and a shallow angle at a location further removed from the pivot axis, the shallow angle being substantially parallel with an axis of symmetry of the pair of shears in an open position, which enables the consecutive cutting of substantially parallel wires, so that only a minimum of force is required from a user.

The embodiment having a set of wire cutting edges can have numerous configurations in relation to the position of the set(s) of tube cutting edges and wire cutting edges. Preferably, the set of wire cutting edges is positioned closest to the pivot axis. In addition, in case at least two sets of tube cutting edges for cutting through tubes of different diameters are present, it is preferred that the set of tube cutting edges for the larger diameter tubes is positioned furthest from the pivot axis.

### BRIEF DESCRIPTION OF THE DRAWINGS

The invention will now be explained in greater detail with reference to the figures, in which equal or similar parts are indicated by the same reference signs, and in which:
Figures 1, 2 and 3 show various views of a single shear of a preferred embodiment of the pair of shears according to the invention.
Figures 4, 5 and 6 show various views of the preferred embodiment of the pair of shears according to the invention.
Figures 7 and 8 show the preferred embodiment of the pair of shears according to the invention in a closed position and an open position, respectively.

### DETAILED DESCRIPTION OF THE PREFERRED EMBODIMENT

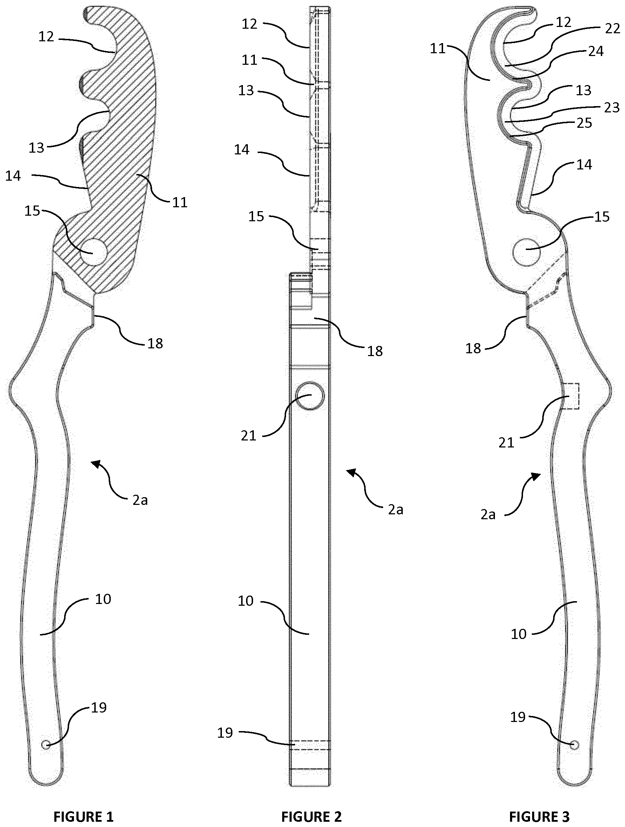

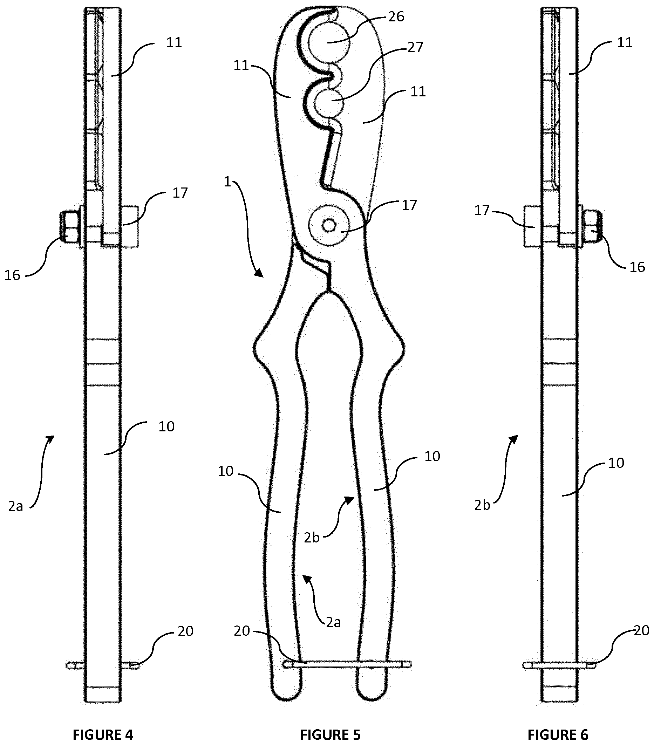

In Figures 1, 2 and 3, a single shear 2a of a preferred embodiment of a pair of shears 1 according to the present invention is shown. In Figures 4, 5, 6, 7 and 8, a combination of two shears 2a, 2b, i.e. the entire pair of shears 1, is shown. In the shown example, the two shears 2a, 2b are identical, which is not essential within the framework of the present invention.

Each shear 2a, 2b has a gripping portion 10 that is intended to be handled by a user and a shearing portion 11 that is intended to be used for cutting tubes (not shown) at the position of a tube cutting section where a tube cutting edge 12 for large diameter tubes and a tube cutting edge 13 for small diameter tubes are located. Furthermore, the shearing portion 11 is equipped with a wire cutting section that includes a wire cutting edge 14, which is suitable for cutting wire (not shown), particularly electrical wire. In the pair of shears 1, the two shears 2a, 2b are pivotally connected through a pivot axis 15, wherein one shear 2a, 2b is positioned on top of the other as seen in the direction in which the pivot axis 15 extends. In the shown example, the pivot axis 15 is located between the gripping portion 10 and the shearing portion 11 of the respective shears 2a, 2b. Furthermore, in the shown example, the wire cutting edge 14 is positioned closest to the pivot axis 15, whereas the tube cutting edge 12 for large diameter tubes is positioned most remote from the pivot axis 15. The connection between the two shears 2a, 2b at the position of the pivot axis 15 may be realized in any suitable way, for example, through application of a nut 16 and a bolt 17 as can be seen in Figures 4 and 6.

In the configuration of the shears 2a, 2b as shown, with the pivot axis 15 located as mentioned, i.e. between the gripping portion 10 and the shearing portion 11 of the respective shears 2a, 2b, the pair of shears 1 resembles a commonly known pair of scissors. Hence, a relation between movements of the gripping portions 10 and the shearing portions 11 is obtained according to which the shearing portions 11 are moved towards each other when the gripping portions 10 are moved towards each other, and in which the shearing portions 11 are moved away from each other when the gripping portions 10 are moved away from each other. Surfaces of the shears 2a, 2b which are intended for moving across each other in the process are generally planar.

The gripping portion 10 of each shear 2a, 2b is equipped with a stopper 18 that limits bringing the gripping portions 10 of the pair of shears 1 towards one another. Hence, the stopper 18 has a function in determining the mutual position of the shears 2a, 2b in a closed position of the pair of shears 1. The gripping portion 10 is further equipped with a hole 19 for facilitating a clip 20 which has a function in keeping the pair of shears 1 in the closed position, for example, for storage purposes. A recess 21 is present in the gripping portion 10 for accommodating an end of a spring (not shown) that enables spring-loaded opening of the pair of shears 1.

At the position of the tube cutting edges 12, 13, the shear 2a, 2b is provided with partially beveled sections 22, 23. In particular, the partially beveled sections 22, 23 are delimited by the respective cutting edge 12, 13 on the one side and another edge 24, 25 having a similar shape as the cutting edges 12, 13, yet being longer, on the other side. The beveled shape of the sections 22, 23 aids in getting an accurate and clean cut.

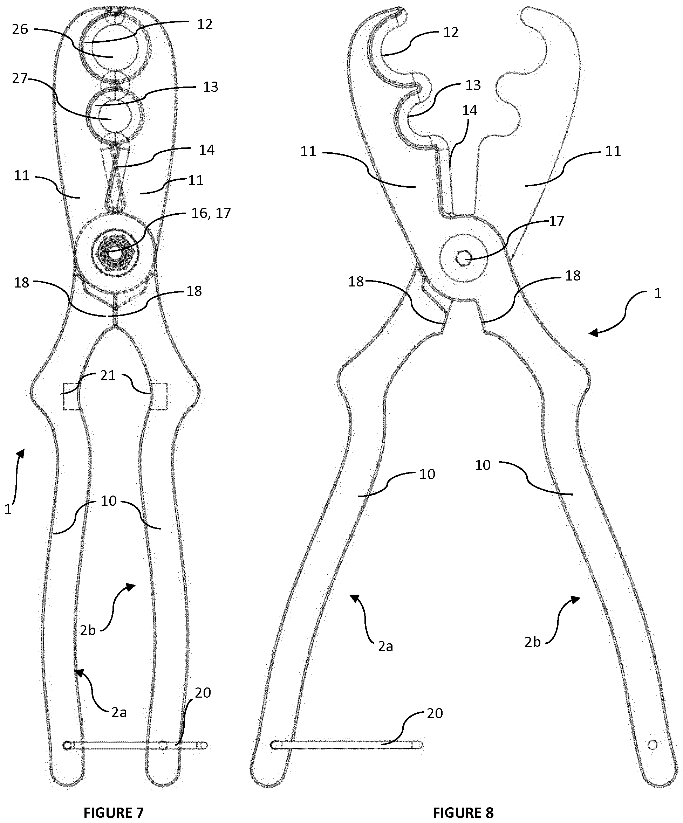

Figures 7 and 8 illustrate the fact that the pair of shears 1 can be in one of two positions, namely a closed position as shown in figure 7, and an open position as shown in figure 8. In figure 7, for the sake of illustration, dashed lines are used for indicating shapes/edges which are hidden from sight in the view of figure 7. It will be understood that the open position is associated with a situation in which the pair of shears 1 is positioned with respect to a tube or at least one wire to be cut, prior to performing a cutting action on the tube or the wire(s), and that the closed position is associated with a situation in which the pair of shears 1 has performed the cutting action, as a result of which the tube is cut or the at least one wire is cut. The tube cutting edges 12, 13 have a concave shape which is adapted to the circular periphery of the tubes to be cut, such that it is achieved that cutting the tubes involves only cutting through the wall of the tubes, without having the tube cutting edges 12, 13 move in a central space of the tubes where wiring may be present. In this respect, it is noted that the stoppers 18 are positioned such that in the closed position of the pair of shears 1, spaces 26, 27 are present between the respective sets of tube cutting edges 12, 13, particularly spaces 26, 27 having a convexly curved periphery as determined by the concave shapes of the cutting edges 12, 13. In the shown example, the tube cutting edges 12, 13 are generally shaped as a half circle, as a result of which the spaces 26, 27 have a generally circular periphery as can be seen in figure 7. Figure 7 furthermore illustrates the fact that the set of wire cutting edges 14 leaves no space in the closed position of the pair of shears 1. In this way, the pair of shears 1 is suitable to be used for cutting through solid objects such as wires.

In the open position of the pair of shears 1, the unfastened clip 20 allows free movement of the gripping portions 10 of the shears 2a, 2b, as long as the stoppers 18 do not abut against one another. In this position, easy insertion of a tube in the tube cutting section is possible, or easy insertion of one or more wires in the wire cutting section is possible. Starting from this position, all that a user needs to do is moving the gripping portions 10 of the shears 2a, 2b towards each other, which can be done single-handedly, in order to perform a cutting action on the tube or the wire(s). Due to the special shape of the tube cutting edges 12, 13, it is possible to have a cutting action on tubes which stops as soon as the cutting edges 12, 13 have passed through the wall of the tubes. This is advantageous in situations in which tubes containing one or more wires need to be cut without also cutting the wires in the process.

In the foregoing, it has been described, among other things, how the pair of shears according to the present invention can be used for cutting a tube. For the sake of completeness, it is noted that that should not be understood such as to imply that the invention is limited to cutting one tube at a time. The possibility of cutting two or even more tubes at one time by means of the pair of shears comprising more than one set of tube cutting edges is part of the invention as well as the possibility of cutting a single tube at one time.

It will be clear to a person skilled in the art that the scope of the invention is not limited to the examples discussed in the foregoing, but that several amendments and modifications thereof are possible without deviating from the scope of the invention as defined in the attached claims.

## Claims

1. A pair of shears (1) for cutting tube, in particular flexible tube containing at least one wire, comprising two shears (2a, 2b) which are pivotally connected to each other through a pivot axis (15), wherein each shear (2a, 2b) is equipped with a gripping portion (10) which is intended to be taken hold of by a user, wherein each shear (2a, 2b) is furthermore equipped with a shearing portion (11) having at least one tube cutting edge (12, 13) for cutting tube wherein the at least one tube cutting edge (12, 13) of the one shear (2a) is located at substantially the same distance from the pivot axis (15) as the at least one tube cutting edge (12, 13) of the other shear (2b) and constitutes a set therewith, wherein the tube cutting edges (12, 13) of a set are movable towards each other and away from each other by moving the gripping portions (10) of the shears (2a, 2b) with respect to each other, wherein both tube cutting edges (12, 13) of a set have a concave shape, and wherein, in a closed position of the pair of shears (1), in which the tube cutting edges (12, 13) have been moved towards each other to a maximum extent, the shearing portions (11) of the shears (2a, 2b) partially overlap and a space (26, 27) having a convexly curved periphery is delimited by the tube cutting edges (12, 13).

2. The pair of shears (1) according to claim 1, wherein the shearing portions (11) of the shears (2a, 2b) comprise at least partially beveled sections (22, 23) at the position of the tube cutting edges (12, 13).

3. The pair of shears (1) according to claim 2, wherein the tube cutting edges (12,13) are present at the side of first main surfaces of the shears (2a, 2b) for moving across each other and wherein the at least partially beveled sections (22, 23) extend from the tube cutting edges (12, 13) to other delimiting edges located at second main surfaces.

4. The pair of shears (1) according to any of claims 1-3, wherein both tube cutting edges (12, 13) of a set are shaped as a half circle or a long half oval.

5. The pair of shears (1) according to any of claims 1-4, wherein, in each of the shears (2a, 2b), the gripping portion (10) and the shearing portion (11) extend at different sides of the pivot axis (15).

6. The pair of shears (1) according to any of claims 1-5, wherein the shears (2a, 2b) are equipped with stoppers (18) for abutting against each other in the closed position of the pair of shears (1).

7. The pair of shears (1) according to any of claims 1-6, wherein the shears (2a, 2b) are connected by an interference fit at the position of the pivot axis (15).

8. The pair of shears (1) according to any of claims 1-7, comprising a spring which is adapted to bias the pair of shears (1) to an open position in which the tube cutting edges (12, 13) of the shears (2a, 2b) are maximally moved apart.

9. The pair of shears (1) according to any of claims 1-8, comprising at least two sets of tube cutting edges (12, 13) of different size for delimiting two differently sized spaces (26, 27) in the closed position of the pair of shears (1).

10. The pair of shears (1) according to any of claims 1-9, wherein the shearing portions (11) of the shears (2a, 2b) further comprise a wire cutting edge (14) for cutting through wire, wherein the wire cutting edge (14) of the one shear (2a) is located at substantially the same distance from the pivot axis (15) as the at least one wire cutting edge (14) of the other shear (2b) and constitutes a set therewith, wherein the wire cutting edges (14) constituting the set are movable towards each other and away from each other by moving the gripping portions (10) of the shears (2a, 2b) with respect to each other, and wherein the wire cutting edges (14) constituting the set are adapted to be moved beyond each other in the closed position of the pair of shears (1), thereby leaving no space between them in the said position of the pair of shears (1).

11. The pair of shears (1) according to claim 10 insofar as dependent on claim 9, wherein the sets of tube cutting edges (12, 13) and the set of wire cutting edges (14) are located on the same side of the pivot axis (15), and wherein the set of wire cutting edges (14) is located closest to the pivot axis (15) and the set of tube cutting edges (12, 13) adapted for delimiting the largest space (26) in the closed position of the pair of shears (1) is located furthest from the pivot axis (15).

## Patentansprüche

1. Schere (1)zum Schneiden von Schlauch, insbesondere flexiblem Schlauch, der mindestens einen Draht beinhaltet, zwei Scherenklingen (2a, 2b) umfassend, die durch eine Schwenkachse (15) schwenkbar miteinander verbunden sind, wobei jede Scherenklinge (2a, 2b) mit einem Griffabschnitt (10) ausgestattet ist, der dafür vorgesehen ist, von einem Benutzer gehalten zu werden, wobei jede Scherenklinge (2a, 2b) ferner mit einem Scherabschnitt (11) ausgestattet ist, der mindestens eine Schlauchschneidekante (12, 13) zum Schneiden von Schlauch aufweist, wobei die mindestens eine Schlauchschneidekante (12, 13) der einen Scherenklinge (2a) in im Wesentlichen dem gleichen Abstand zur Schwenkachse (15) angeordnet ist wie die mindestens eine Schlauchschneidekante (12, 13) der anderen Scherenklinge (2b) und mit dieser einen Satz bildet, wobei die Schlauchschneidekanten (12, 13) eines Satzes durch Bewegen der Griffabschnitte (10) der Scherenklingen (2a, 2b) im Verhältnis zueinander hin zueinander und weg voneinander beweglich sind, wobei beide Schlauchschneidekanten (12, 13) eines Satzes eine konkave Form aufweisen und wobei sich die Scherabschnitte (11)der Scherenklingen (2a, 2b) in einer geschlossenen Position der Schere (1), in der sich die Schlauchschneidekanten (12, 13) in einem maximalen Umfang zueinander hin bewegt haben, teilweise überlappen und durch die Schlauchschneidekanten (12, 13) ein Zwischenraum (26, 27) mit einem konvex gekrümmten Umfang begrenzt ist.

2. Die Schere (1) nach Anspruch 1, wobei die Scherabschnitte (11) der Scherenklingen (2a, 2b) an der Position der Schlauchschneidekanten (12, 13) zumindest teilweise abgeschrägte Teilabschnitte (22, 23) umfassen.

3. Die Schere (1) nach Anspruch 2, wobei die Schlauchschneidekanten (12, 13) an der Seite der ersten Hauptflächen der Scherenklingen (2a, 2b) vorhanden sind, um sich übereinander zu bewegen, und wobei sich die zumindest teilweise abgeschrägten Teilabschnitte (22, 23) von den Schlauchschneidekanten (12, 13) zu anderen begrenzenden Kanten erstrecken, die an zweiten Hauptflächen angeordnet sind.

4. Die Schere (1) nach irgendeinem der Ansprüche 1 bis 3, wobei beide Schlauchschneidekanten (12, 13) eines Satzes als ein Halbkreis oder ein langes Halboval geformt sind.

5. Die Schere (1) nach irgendeinem der Ansprüche 1 bis 4, wobei sich bei jeder der Scherenklingen (2a, 2b) der Griffabschnitt (10) und der Scherabschitt (11) an verschiedenen Seiten der Schwenkachse (15) erstrecken.

6. Die Schere (1) nach irgendeinem der Ansprüche 1 bis 5, wobei die Scherenklingen (2a, 2b) mit Anschlägen (18) ausgestattet sind, um in der geschlossenen Position der Schere (1) aneinander anzuliegen.

7. Die Schere (1) nach irgendeinem der Ansprüche 1 bis 6, wobei die Scherenklingen (2a, 2b) durch eine Presspassung an der Position der Schwenkachse (15) verbunden sind.

8. Die Schere (1) nach irgendeinem der Ansprüche 1 bis 7, eine Feder umfassend, die dafür eingerichtet ist, die Schere (1) in eine geöffnete Position vorzuspannen, in der die Schlauchschneidekanten (12, 13) der Scherenklingen (2a, 2b) maximal auseinander bewegt sind.

9. Die Schere (1) nach irgendeinem der Ansprüche 1 bis 8, mindestens zwei Sätze von Schlauchschneidekanten (12, 13) verschiedener Größe umfassend, um in der geschlossenen Position der Schere (1) zwei unterschiedlich bemessene Zwischenräume (26, 27) zu begrenzen.

10. Die Schere (1) nach irgendeinem der Ansprüche 1 bis 9, wobei die Scherabschnitte (11) der Scherenklingen (2a, 2b) ferner eine Drahtschneidekante (14) zum Durchschneiden von Draht umfassen, wobei die Drahtschneidekante (14) der einen Scherenklinge (2a) in im Wesentlichen dem gleichen Abstand zur Schwenkachse (15) angeordnet ist wie die mindestens eine Drahtschneidekante (14) der anderen Scherenklinge (2b) und mit dieser einen Satz bildet, wobei die Drahtschneidekanten (14), die den Satz bilden, durch Bewegen der Griffabschnitte (10) der Scherenklingen (2a, 2b) im Verhältnis zueinander hin zueinander und weg voneinander beweglich sind, und wobei die Drahtschneidekanten (14), die den Satz bilden, dafür eingerichtet sind, in der geschlossenen Position der Schere (1) über einander hinaus bewegt zu sein, wodurch in dieser Position der Schere (1) zwischen ihnen kein Zwischenraum bleibt.

11. Die Schere (1) nach Anspruch 10, insoweit von Anspruch 9 abhängig, wobei die Sätze von Schlauchschneidekanten (12, 13) und der Satz Drahtschneidekanten (14) auf der gleichen Seite der Schwenkachse (15) angeordnet sind und wobei der Satz Drahtschneidekanten (14) am nächsten zur Schwenkachse (15) angeordnet ist und der Satz Schlauchschneidekanten (12, 13), die dafür eingerichtet sind, den größten Zwischenraum (26) zu begrenzen, in der geschlossenen Position der Schere (1) am entferntesten von der Schwenkachse (15) angeordnet ist.

## Revendications

1. Paire de cisailles (1) pour couper un tube, en particulier un tube flexible contenant au moins un fil, comprenant deux cisailles (2a, 2b) qui sont raccordées de manière pivotante entre elles par le biais d'un axe de pivot (15), dans laquelle chaque cisaille (2a, 2b) est équipée d'une partie de préhension (10) qui est prévue pour être tenue par un utilisateur, dans laquelle chaque cisaille (2a, 2b) est en outre équipée avec une partie de cisaillement (11) ayant au moins un bord de coupe de tube (12, 13) pour couper le tube, dans laquelle le au moins un bord de coupe de tube (12, 13) de la une cisaille (2a) est positionné sensiblement à la même distance de l'axe de pivot (15) que le au moins un bord de coupe de tube (12, 13) de l'autre cisaille (2b) et constitue un ensemble avec ce dernier, dans laquelle les bords de coupe de tube (12, 13) d'un ensemble sont mobiles l'un vers l'autre et à l'opposé l'un de l'autre en déplaçant les parties de préhension (10) des cisailles (2a, 2b) l'une par rapport à l'autre, dans laquelle les deux bords de coupe de tube (12, 13) d'un ensemble ont une forme concave, et dans laquelle, dans une position fermée de la paire de cisailles (1), dans laquelle les bords de coupe de tube (12, 13) ont été déplacés l'un vers l'autre jusqu'à une étendue maximale, les parties de cisaillement (11) des cisailles (2a, 2b) se chevauchent partiellement, et un espace (26, 27) ayant une périphérie incurvée de manière convexe est délimité par les bords de coupe de tube (12, 13).

2. Paire de cisailles (1) selon la revendication 1, dans laquelle les parties de cisaillement (11) des cisailles (2a, 2b) comprennent des sections au moins partiellement biseautées (22, 23) dans la position des bords de coupe de tube (12, 13).

3. Paire de cisailles (1) selon la revendication 2, dans laquelle les bords de coupe de tube (12, 13) sont présents du côté des premières surfaces principales des cisailles (2a, 2b) pour se déplacer l'une sur l'autre et dans laquelle les sections au moins partiellement biseautées (22, 23) s'étendent à partir des bords de coupe de tube (12, 13) jusqu'aux autres bords de délimitation positionnés au niveau des secondes surfaces principales.

4. Paire de cisailles (1) selon l'une quelconque des revendications 1 à 3, dans laquelle les deux bords de coupe de tube (12, 13) d'un ensemble sont formés comme un demi-cercle ou un long demi-ovale.

5. Paire de cisailles (1) selon l'une quelconque des revendications 1 à 4, dans laquelle, dans chacune des cisailles (2a, 2b), la partie de préhension (10) et la partie de cisaillement (11) s'étendent sur des côtés différents de l'axe de pivot (15).

6. Paire de cisailles (1) selon l'une quelconque des revendications 1 à 5, dans laquelle les cisailles (2a, 2b) sont équipées de butées (18) pour venir en butée l'une contre l'autre dans la position fermée de la paire de cisailles (1).

7. Paire de cisailles (1) selon l'une quelconque des revendications 1 à 6, dans laquelle les cisailles (2a, 2b) sont raccordés par un ajustement avec serrage dans la position de l'axe de pivot (15).

8. Paire de cisailles (1) selon l'une quelconque des revendications 1 à 7, comprenant un ressort qui est adapté pour solliciter la paire de cisailles (1) dans une position ouverte dans laquelle les bords de coupe de tube (12, 13) des cisailles (2a, 2b) sont écartés au maximum.

9. Paire de cisailles (1) selon l'une quelconque des revendications 1 à 8, comprenant au moins deux ensembles de bords de coupe de tube (12, 13) de taille différente pour délimiter deux espaces (26, 27) différemment dimensionnés dans la position fermée de la paire de cisailles (1).

10. Paire de cisailles (1) selon l'une quelconque des revendications 1 à 9, dans laquelle les parties de cisaillement (11) des cisailles (2a, 2b) comprennent en outre un bord de coupe de fil (14) pour couper le fil, dans laquelle le bord de coupe de fil (14) de la une cisaille (2a) est positionné sensiblement à la même distance de l'axe de pivot (15) que le au moins un bord de coupe de fil (14) de l'autre cisaille (2b) et constitue un ensemble avec ce dernier, dans laquelle les bords de coupe de fil (14) constituant l'ensemble sont mobiles l'un vers l'autre et à l'opposé l'un de l'autre en déplaçant les parties de préhension (10) des cisailles (2a, 2b) l'une par rapport à l'autre, et dans laquelle les bords de coupe de fil (14) constituant l'ensemble sont adaptés pour être déplacés l'un au-delà de l'autre dans la position fermée de la paire de cisailles (1), laissant ainsi aucun espace entre eux dans ladite position de la paire de cisailles (1).

11. Paire de cisailles (1) selon la revendication 10 dans le mesure où elle dépend de la revendication 9, dans laquelle les ensembles de bords de coupe de tube (12, 13) et l'ensemble de bords de coupe de fil (14) sont positionnés d'un même côté de l'axe de pivot (15), et dans laquelle l'ensemble de bords de coupe de fil (14) est positionné le plus à proximité de l'axe de pivot (15) et l'ensemble de bords de coupe de tube (12, 13) adapté pour délimiter le plus grand espace (26) dans la position fermée de la paire de cisailles (1) est positionné le plus à distance de l'axe de pivot (15).
